# EUROPÄISCHE PATENTSCHRIFT

(11) **EP 2 626 242 B1**
(45) Veröffentlichungstag und Bekanntmachung des Hinweises auf die Patenterteilung: **03.04.2019**
(21) Anmeldenummer: 13155131.9
(22) Anmeldetag: 13.02.2013
(51) Int. Cl.: B60P 7/15

(54) **Verfahren zum stufenlosen Bewegen von zumindest einem Rastelement eines Sperrelements**
Method for continuously moving of at least one catch element of a locking element
Procédé de déplacement en continu d'au moins un élément d'arrêt d'un élément de verrouillage

(30) Priorität: 13.02.2012 DE 102012002607
(43) Veröffentlichungstag der Anmeldung: 14.08.2013
(73) Patentinhaber: allsafe GmbH & Co. KG, 78234 Engen (DE)
(72) Erfinder: von Känel, Andreas, D-71336 Waiblingen (DE); Merk, Michael, D-78259 Ehingen (DE); Moll, Hubert, 78357 Mühlingen (DE); Suhr, Christian, D-78224 Singen (DE)
(74) Vertreter: Patentanwälte und Rechtsanwalt Weiß, Arat & Partner mbB

(56) Entgegenhaltungen:
- DE-A1-102004 011 003
- GB-A- 2 301 318
- US-A- 3 110 506
- US-A- 5 215 288
- US-B1- 6 749 383

## Beschreibung

### TECHNISCHES GEBIET

Die Erfindung betrifft ein Sperrelement nach dem Oberbegriff des Anspruchs 1.

### STAND DER TECHNIK

In der Fahrzeugtechnik sind eine Vielzahl von Sperrelementen für Ladegut bspw. auf LKW's bekannt. Ähnliches gilt auch für Flugzeuge bzw. andere Frachträume von Eisenbahn, Schiffen od. dgl. Fahrzeuge. Zur Festlegung dieser Sperrstangen, Sperrschienen oder allgemein Sperrelementen sind in der Regel ein oder zwei Schienen an Wänden, Decken und/oder Boden vorgesehen, entlang denen solche Sperrelemente verschoben und wieder festgelegt werden können. Als Beispiel wird hier auf die DE 20 2004 012 521 U1 oder die DE 201 15 232 U1 verwiesen.

Weiter wird auf die GB 2 301 318 A hingewiesen, die ein mehrteiliges Sperrelement aufzeigt, welches zwischen zwei Schienen in einem Fahrzeug angebracht ist und dessen Mechanik zum Festlegen unter anderen einen Kurbeltrieb aufweist, der zumindest teilweise ausserhalb der Profils des Sperrelements angeordnet ist. Auch wird auf die DE 10 2004 011 003 A1 hingewiesen, welche ein Sperrelement aufweist, das ein mehrstufiges Festlegen ermöglicht, dessen Mechanik zum Festlegen jedoch nachteilig ausserhalb des Profils des Sperrelements angeordnet ist.

Die vorliegende Erfindung bezieht sich aber nicht nur auf die Festlegung bzw. Positionierung eines Sperrelements zwischen zwei Schienen, sondern auch insbesondere auf die Festlegung eines Sperrelementes zwischen zwei möglicherweise ebenfalls an Schienen bewegbaren Sperrbalken. Diese Sperrelemente werden in der Regel als Spriegel bezeichnet.

### AUFGABE

Aufgabe der vorliegenden Erfindung ist es, ein Verfahren und ein Sperrelement der o. g. Art zu entwickeln, welches sehr einfach hergestellt werden kann, aber ausserordentlich funktional ausgebildet ist.

### LÖSUNG DER AUFGABE

Zur Lösung der Aufgabe führen die Merkmale nach dem kennzeichnenden Teil von Anspruch 1.

Wesentliche Merkmale der vorliegenden Erfindung sind zum einen, dass das Festlegen des gesamten Sperrelementes durch eine einzige Bewegung und dass das Festlegen auf besonders einfache und kraftsparende Weise, dabei aber äusserst präzise und sicher erfolgt. In einem bevorzugten Ausführungsbeispiel geschieht das selbstständige Festlegen durch Überfahren eines Todpunktes, so dass zusätzlich Bauelemente wie Federn od. dgl. nicht notwendig sind.

Bei einer entsprechenden erfindungsgemässen Vorrichtung soll das zumindest eine Rastelement mit einem Kurbeltrieb verbunden sein. Der Kurbeltrieb hat den Vorteil, dass bei einer geeigneten Kniehebelanordnung Todpunkte überfahren werden können. Diese Todpunkte erschweren dann eine Rückkehr der Bewegung, so dass hierdurch ein selbsttätiges Verriegeln in einer gewünschten Gebrauchslage erfolgt.

Nach der Erfindung weist der Kurbeltrieb einen Kniehebel auf, denkbar ist aber auch, eine Kurvenscheibe, die auf beliebige Art und Weise bewegt werden kann und exzentrisch über ggf. entsprechende Gestänge mit dem Rastelement verbunden ist.

Nach der Erfindung sind der Kurbeltrieb und die Mechanik zum Bewegen des Kurbeltriebs innerhalb eines Profils des Sperrelements angeordnet. Das bedeutet, dass keine störenden Bauelemente aussen an dem Sperrelement angeordnet sind und hierdurch auch ein Verschleiss od. dgl. vermindert ist.

Des Weiteren ist daran gedacht, den Kurbeltrieb mit einem Überprofil zu verbinden. Dieses Überprofil ist so ausgestaltet, dass es gegenüber dem eigentlichen Hauptprofil gleitbar ist und an seiner unteren Stirnfläche ein Rastelement aufweist. Das heisst, das Überprofil ist relativ zu dem Hauptprofil verschiebbar. In einem besonders bevorzugten Ausführungsbeispiel weist auch das Hauptprofil an seiner freien Stirnkante ein Rastelement auf, so dass das gesamte Sperrelement zwischen zwei Schienen wählbar festgelegt werden kann.

Die Verbindung zwischen dem Kurbeltrieb bzw. dem Hauptprofil und dem Überprofil erfolgt bevorzugt über ein Gestänge und einen Querbolzen, der wiederum gleitbar in einem Langloch in dem Hauptprofil angeordnet ist. Des Weiteren ist dieser Querbolzen aber auch mit dem Überprofil verbunden, wobei die entsprechenden Verbindungen natürlich gelenkig erfolgen. Bei Bewegung des Kurbeltriebs wird so über den Querbolzen das Überprofil mitgenommen und nach unten gedrückt, so dass das entsprechende Rastelement in eine Ausnehmung einer Bodenschiene einfahren kann.

Sobald dann das Überprofil auf der Bodenschiene festliegt, kann bei einer weiteren Bewegung des Kurbeltriebs das Hauptprofil nach oben gedrückt werden, so dass das obere Rastelement in eine Ausnehmung der Deckenschiene einfahren kann.

Das Lösen geschieht auf umgekehrtem Weg, wobei das Hauptprofil, da es ebenfalls über einen Querbolzen in einem Langloch mit einem entsprechenden Führungsschuh verbunden ist, unter seinem eigenen Gewicht nach unten fällt.

In einem anderen Ausführungsbeispiel der Erfindung kann auch daran gedacht sein, nicht nur zwei Profile vorzusehen, die teleskopartig ineinander verschiebbar sind, sondern sogar drei und mehr. Wichtig bei der vorliegenden Erfindung ist jedoch allein, dass durch eine einzige Bewegung von zum Beispiel einem Kurbeltrieb ein unteres Rastelement in eine entsprechende Ausnehmung in einer Bodenschiene und durch eine weitere Bewegung des Kurbeltriebs ein oberes Rastelement in eine Ausnehmung einer Deckenschienen eingesetzt werden kann.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Draufsicht auf ein erfindungsgemässes Sperrelement ausserhalb Rastlage;
**Figuren 2 bis 6** Draufsichten auf das Sperrelement gemäss Figur 1 in unterschiedlichen Gebrauchslagen;
**Figuren 7** eine Draufsicht auf ein weiteres Ausführungsbeispiel eines erfindungsgemässen Sperrelements;
**Figur 8** eine perspektivische Ansicht eines Kopfteils des Sperrelements gemäss Figur 1 mit einem oberen Rastelement;
**Figuren 9** **und 10** schematisch dargestellte Draufsicht auf das Kopfteil gemäss Figur 8 in zwei unterschiedlichen Gebrauchslagen.

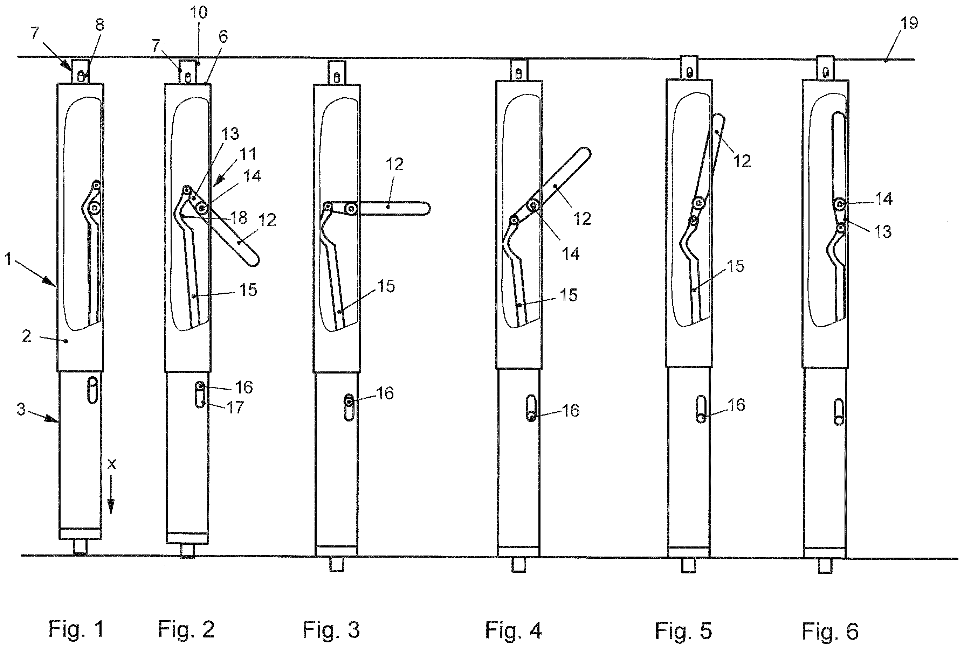

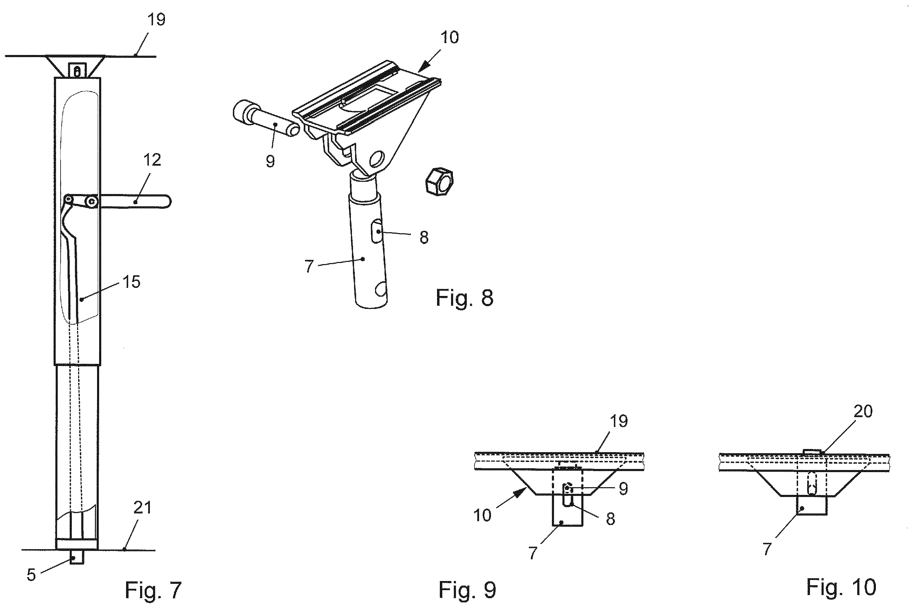

Gemäss Figur 1 weist ein Sperrelement 1 ein Profil 2, auf das ein Überprofil 3 so aufgesetzt ist, dass es gegenüber dem Profil 2 axial und teleskopartig in Richtung des Pfeils x verschiebbar ist. Von einer nach unten gerichteten Stirnfläche des Überprofils 3 ragt nach unten ein Rastelement 5 ab. Ebenso ragt von einer oberen Stirnfläche 6 des Profils 2 nach oben ein Rastelement 7 ab. Dieses Rastelement 7 besitzt ein Langloch 8, wie dies in den Figuren 8 bis 10 näher gezeigt ist. Dieses Langloch 8 wird von einem Querbolzen 9 durchsetzt, um das Rastelement 7 an einem Führungsschuh 10 anzukoppeln.

In dem Profil 2 befindet sich ein Kurbeltrieb 11, welcher aus einem Hebel 12 und einem Kniehebel 13 besteht. Hebel 12 und Kniehebel 13 sind über eine Drehachse 14 in dem Profil 2 festgelegt.

Ein freies Ende des Kniehebels 13 ist über ein Gestänge 15 mit einem Gleitbolzen 16 verbunden, der in einem Langloch 17 des Profils 3 geführt ist.

Die Funktionsweise der vorliegenden Erfindung ist folgende:
Gemäss Figur 1 befinden sich die beiden Rastelemente 5 und 7 ausserhalb einer Rastlage. Dabei hängt das Sperrelement 1 an einer Deckenschiene 19, wobei das Kopfteil 10 entlang dieser Deckensschiene 19 verfahrbar ist. Dies geschieht oberhalb einer Bodenschiene 21. Auf diese Weise ist das Sperrelement frei und kann entlang der Deckenschiene 10 verschoben werden.

Zum Festlegen des Sperrelements 1 wird nun der Hebel 12 um die Drehachse 14, wie in Figur 2 und 3 gezeigt, gedreht, wobei über das Gestänge 15 und den Gleitbolzen 16 das Überprofil 3 nach unten verschoben wird bzw. nach unten fallen kann Hierdurch wird das Rastelement 5 in eine Ausnehmung in der Bodenschiene 21 eingesetzt, wie in den Figuren 2 und 3 dargestellt.

Wird nunmehr der Hebel 12 gemäss den Figuren 4 bis 6 weiter entgegen dem Uhrzeigersinn um die Drehachse 14 bewegt, so wird das Profil 2 nach oben gedrückt, so dass das Rastelement 7 in eine Ausnehmung in der Deckenschiene 19 einfahren kann. Dies geschieht solange, bis der Kniehebel 13, wie in Figur 6 gezeigt, einen Todpunkt gegenüber der Drehachse 14 überwunden hat, so dass diese Lage automatisch verriegelt ist.

Soll das Sperrelement gelöst werden, wird der Hebel 12 im Uhrzeigersinn bewegt. Dabei überfährt der Kniehebel 13 ohne grosse Kraftanstrengung den in Figur 6 gezeigten Todpunkt und kann weiter im Uhrzeigersinn bewegt werden. Dabei fällt das Profil 2 unter seinem eigenen Gewicht nach unten und zwar in dem Mass des Langlochs 8, wobei gleichzeitig das Rastelement 7 aus der Ausnehmung in der Deckenschiene herausgleitet. Damit wird das Sperrelement 1 wiederum gegenüber der Deckenschiene 10 frei. Wird nun der Hebel weiter gedreht, so wird das Überprofil 3 angehoben, bis die in Figur 1 gezeigte Gebrauchslage erreicht ist. Auch dabei überfährt der Kniehebel 13 wiederum gegenüber der Drehachse 14 einen Todpunkt, was durch eine Mulde 18 in dem Gestänge 15 erleichtert wird, welche die Drehachse 14 aufnimmt.

In Figur 7 ist ein weiteres Ausführungsbeispiel eines erfindungsgemässen Sperrelements 1.1 angedeutet. Hier ist das Gestänge 15 direkt mit dem Rastelemet 5 verbunden, so dass dieses Rastelemet 5 in den in den Figuren 1-3 gezeigten Bewegungsabläufen des Kurbeltrieb direkt in eine Ausnehmung in der Bodenschiene 21 eingedrückt werden kann. Die Bewegungsabläufe für das Rastelemet 7 entsprechen den in den Figuren 4-6 beschriebenen Bewegungen des Kurbeltriebs.

**Bezugszeichenliste**

| | | | | | |
|---|---|---|---|---|---|
| 1 | Sperrelement | 34 | | 67 | |
| 2 | Profil | 35 | | 68 | |
| 3 | Uberprofil | 36 | | 69 | |
| 4 | Stirnfläche | 37 | | 70 | |
| 5 | Rastelement | 38 | | 71 | |
| 6 | Stirnfläche | 39 | | 72 | |
| 7 | Rastelement | 40 | | 73 | |
| 8 | Langloch | 41 | | 74 | |
| 9 | Querbolzen | 42 | | 75 | |
| 10 | Kopfteil | 43 | | 76 | |
| 11 | Kurbeltrieb | 44 | | 77 | |
| 12 | Hebel | 45 | | 78 | |
| 13 | Kniehebel | 46 | | 79 | |
| 14 | Drehachse | 47 | | | |
| 15 | Gestänge | 48 | | | |
| 16 | Gleitbolzen | 49 | | | |
| 17 | Langloch | 50 | | | |
| 18 | Mulde | 51 | | | |
| 19 | Deckensschiene | 52 | | | |
| 20 | Ausnehmung | 53 | | | |
| 21 | Bodenschienen | 54 | | x | Pfeil |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sperrelement mit einer Einrichtung zum stufenlosen Bewegen von zumindest einem Rastelement (5, 7) aus bzw. in eine/r Rastlage an zumindest einer Schiene (19, 21), wobei zumindest das Rastelement (5, 7) mit einem Kurbeltrieb (11) verbunden ist,
**dadurch gekennzeichnet,**
**dass** der Kurbeltrieb (11), welcher aus einem Hebel (12) und einem Kniehebel (13) besteht, in einem Profil (2) angeordnet ist.

2. Sperrelement nach Anspruch 1, **dadurch gekennzeichnet, dass** der Kniehebel mit dem Rastelement (5) verbunden ist.

3. Sperrelement nach Anspruch 1, **dadurch gekennzeichnet, dass** der Kurbeltrieb eine Kurvenscheibe aufweist, die exzentrisch mit dem Rastelement (5) verbunden ist.

4. Sperrelement nach wenigstens einem der Ansprüche 1 bis 3, **dadurch gekennzeichnet, dass** der Hebel (12) des Kurbeltriebs (11) um eine Drehachse (14) drehbar ist.

5. Sperrelement nach Anspruch 4, **dadurch gekennzeichnet, dass** die Drehachse (14) in dem Profil (2) angeordnet ist.

6. Sperrelement nach wenigstens einem der Ansprüche 1 bis 5, **dadurch gekennzeichnet, dass** der Kurbeltrieb (11) mit einem Überprofil (3) verbunden ist.

7. Sperrelement nach Anspruch 6, **dadurch gekennzeichnet, dass** auf dem Profil (2) das Überprofil (3) gleitbar angeordnet und an dessen unterer Stirnfläche (4) ein Rastelement (5) angeordnet ist

8. Sperrelement nach Anspruch 6 oder 7, **dadurch gekennzeichnet, dass** das Überprofil (3) relativ zu dem ersten Profil (2) verschiebbar ist.

9. Sperrelement nach wenigstens einem der Ansprüche 1 - 8, **dadurch gekennzeichnet, dass** das Profil (2) an seiner freien Stirnfläche (6) ein weiteres Rastelement (7) aufweist.

10. Sperrelement nach wenigstens einem der Ansprüche 6 bis 8, **dadurch gekennzeichnet, dass** das Profil (3) ein Langloch (17) aufweist, in dem ein Gleitbolzen (16) gleitbar geordnet ist, der einerseits mit dem Kurbeltrieb (11) und andererseits mit dem Überprofil (3) verbunden ist.

11. Sperrelement nach Anspruch 10, **dadurch gekennzeichnet, dass** die Verbindung zwischen Kurbeltrieb (11) und Gleitbolzen (16) über ein Gestänge (15) gelenkig erfolgt.

12. Sperrelement nach wenigstens einem der Ansprüche 1 - 11, **dadurch gekennzeichnet, dass** an dem Profil (2) ein Führungsschuh (10) vorgesehen ist, über den das Sperrelement (1) gleitbar an der Schiene (19) angeordnet ist.

13. Sperrelement nach Anspruch 12, **dadurch gekennzeichnet, dass** das Sperrelement (1) gelenkig an dem Führungsschuh (10) angeordnet ist.

14. Verfahren zum Bewegen von zumindest einem Rastelement (5, 7) eines Sperrelements (1) nach einem der Ansprüche 1 bis 13 aus bzw. in eine/r Rastlage an zumindest einer Schiene (19), wobei das Rastelement (5, 7) in und/oder ausserhalb seiner Rastlage selbsttätig festgelegt wird und die Festlegung durch Überfahren von zumindest einem Todpunkt erfolgt, wobei ein oberes und ein unteres Rastelement (5, 7) linear durch eine Bewegung eines einzigen Antriebs in eine Richtung betätigt werden, wobei bevorzugt im ersten Bewegungsabschnitt zuerst das untere Rastelement und in einem weiteren Bewegungsabschnitt dann das obere Rastelement in Rastlage gebracht werden.

## Claims

1. Locking element having a device for continuously moving of at least one detent element (5, 7) from or into a detent position on at least one rail (19, 21), at least the detent element (5, 7) being connected to a crank drive (11), **characterized in that**
**in that** the crank drive (11), which comprises a lever (12) and a toggle lever (13), is arranged in a profile (2).

2. Locking element according to claim 1, **characterized in that** the toggle lever (13) is connected to the locking element (5).

3. Locking element according to claim 1, **characterized in that** the crank drive (11) has a cam disc which is eccentrically connected to the locking element (5).

4. Locking element according to at least one of claims 1 to 3, **characterized in that** the lever (12) of the crank drive (11) is rotatable about an axis of rotation (14).

5. Locking element according to claim 4, **characterized in that** the axis of rotation (14) is arranged in the profile (2).

6. Locking element according to at least one of claims 1 to 5, **characterized in that** the crank drive (11) is connected to an over-profile (3).

7. Locking element according to claim 6, **characterized in that** the over-profile (3) is slidably arranged on the profile (2) and a locking element (5) is arranged on its lower end face (4).

8. Locking element according to claim 6 or 7, **characterized in that** the over-profile (3) is displaceable relative to the first profile (2).

9. Locking element according to at least one of claims 1 - 8, **characterized in that** the profile (2) has a further locking element (7) on its free end face (6).

10. Locking element according to at least one of claims 6 to 8, **characterized in that** the profile (3) has an elongated hole (17) in which a sliding bolt (16) is slidably arranged, which is connected on the one hand to the crank drive (11) and on the other hand to the over-profile (3).

11. Locking element according to claim 10, **characterized in that** the connection between crank drive (11) and sliding bolt (16) is effected in an articulated manner via a linkage (15).

12. Locking element according to at least one of claims 1 - 11, **characterised in that** a guide shoe (10) is provided on the profile (2), via which guide shoe the locking element (1) is slidably arranged on the rail (19).

13. Blocking element according to claim 12, **characterized in that** the locking element (1) is arranged in an articulated manner on the guide shoe (10).

14. Method for moving at least one detent element (5, 7) of a locking element (1) in accordance with one of the claims 1 to 13 from or into a latching position on at least one rail (19), the latching element (5, 7) being automatically fixed in and/or outside its latching position and the fixing being effected by passing of at least one dead point, an upper and a lower latching element (5, 7) being actuated linearly by a movement of a single drive in one direction, the lower latching element preferably being first brought into a latching position in the first section of movement and the upper latching element then being brought into a latching position in a further section of movement.

## Revendications

1. Élément de verrouillage avec un moyen permettant de déplacer en continu au moins un élément d'arrêt (5, 7) hors ou vers une position d'arrêt sur au moins un rail (19, 21), dans lequel au moins l'élément d'arrêt (5, 7) est connecté à un mécanisme à manivelle (11),
**caractérisé par le fait que**
le mécanisme à manivelle (11), qui se compose d'un levier (12) et d'un levier à genouillère (13), est disposé dans un profilé (2).

2. Elément de verrouillage selon la revendication 1, **caractérisé par le fait que** le levier à genouillère est connecté à l'élément d'arrêt (5).

3. Elément de verrouillage selon la revendication 1, **caractérisé par le fait que** le mécanisme à manivelle présente un disque de came qui est connecté de manière excentrée à l'élément d'arrêt (5).

4. Elément de verrouillage selon au moins l'une des revendications 1 à 3, **caractérisé par le fait que** le levier (12) du mécanisme à manivelle (11) peut tourner autour d'un axe de rotation (14).

5. Elément de verrouillage selon la revendication 4, **caractérisé par le fait que** l'axe de rotation (14) est disposé dans le profilé (2).

6. Élément de verrouillage selon au moins l'une des revendications 1 à 5, **caractérisé par le fait que** le mécanisme à manivelle (11) est connecté à un profilé supérieur (3).

7. Élément de verrouillage selon la revendication 6, **caractérisé par le fait que** sur le profilé (2) est disposé de manière coulissante le profilé supérieur (3) et que sur sa face frontale inférieure (4) est disposé un élément d'arrêt (5).

8. Elément de verrouillage selon la revendication 6 ou 7, **caractérisé par le fait que** le profilé supérieur (3) est déplaçable par rapport au premier profilé (2).

9. Élément de verrouillage selon au moins l'une des revendications 1 à 8, **caractérisé par le fait que** le profilé (2) présente, sur sa face frontale libre (6), un autre élément d'arrêt (7).

10. Elément de verrouillage selon au moins l'une des revendications 6 à 8, **caractérisé par le fait que** le profilé (3) présente un trou oblong (17) dans lequel est disposé de manière coulissante un boulon glissant (16) qui est connecté, d'une part, au mécanisme à manivelle (11) et, d'autre part, au profilé supérieur (3).

11. Elément de verrouillage selon la revendication 10, **caractérisé par le fait que** la connexion entre le mécanisme à manivelle (11) et le boulon glissant (16) a lieu de manière articulée par l'intermédiaire de tringles (15).

12. Élément de verrouillage selon au moins l'une des revendications 1 à 11, **caractérisé par le fait que** sur le profilé (2) est prévu un patin de guidage (10) par l'intermédiaire duquel l'élément de verrouillage (1) est disposé de manière coulissante sur le rail (19).

13. Elément de verrouillage selon la revendication 12, **caractérisé par le fait que** l'élément de verrouillage (1) est disposé de manière articulée sur le patin de guidage (10).

14. Procédé permettant de déplacer au moins un élément d'arrêt (5, 7) d'un élément de verrouillage (1) selon l'une des revendications 1 à 13 hors ou vers une position d'arrêt sur au moins un rail (19), dans lequel l'élément d'arrêt (5, 7) est fixé automatiquement dans et/ou hors de sa position d'arrêt et la fixation a lieu en passant par au moins un point mort, dans lequel un élément d'arrêt supérieur et un élément d'arrêt inférieur (5, 7) sont actionnés linéairement par un déplacement d'un seul entraînement dans une direction, dans lequel de préférence, dans le premier segment de déplacement, tout d'abord l'élément d'arrêt inférieur et ensuite, dans un autre segment de déplacement, l'élément d'arrêt supérieur sont amenés en position d'arrêt.
